# EUROPÄISCHE PATENTANMELDUNG

(11) **EP 0 670 261 A1**
(43) Veröffentlichungstag der Anmeldung: **06.09.1995**
(21) Anmeldenummer: 95101931.4
(22) Anmeldetag: 13.02.1995
(51) Int. Cl.: B62K 15/00, B62K 25/02

(54) **Faltfahrrad**

(30) Priorität: 03.03.1994 DE 9403618 U
(71) Anmelder: DIAMANT FAHRRADWERKE GMBH, D-09117 Chemnitz (DE)
(72) Erfinder: Müller, Hartwig, Dr.-Ing., D-09126 Chemnitz (DE)
(74) Vertreter: Grünecker, Kinkeldey, Stockmair & Schwanhäusser Anwaltssozietät

(57) **Zusammenfassung**

Bei einem Faltfahrrad (F), bei dem der vordere Rahmenteil (V) mit dem hinteren Rahmenteil (H) am Tretlagergehäuse (T) lösbar und in einem vom Tretlagergehäuse beabstandeten Gelenkbereich (G) schwenkbar verbunden ist, und bei dem der hintere Rahmenteil in jedem Dreiecksrahmen eine von der Achsaufnahme (5) ausgehende Verschiebe-Führungsbahn (C) für die Hinterradachse (4) aufweist, verläuft die Führungsbahn (C) entlang einer von der Achsaufnahme (5) in Richtung zum Gelenkbereich (G) angeordneten Rahmenstrebe (10) des Dreiecksrahmens (D).

## Beschreibung

Die Erfindung betrifft ein Faltfahrrad gemäß Oberbegriff des Anspruchs 1.

Bei einem aus DE 39 31 798 B1 bekannten Faltfahrrad ist jede Führungsbahn als Führungsschlitz in einem bandartigen Formteil ausgebildet, der sich von der eine Ecke des Dreiecksrahmens definierenden Achsaufnahme schräg durch den Dreiecksrahmen bis annähernd zur Längsmitte der der Achsaufnahme gegenüberliegenden Rahmenstrebe erstreckt und an dieser befestigt ist. Diese Eingliederung des Formteils in den Dreiecksrahmen ist baulich aufwendig, stört das optische Erscheinungsbild und erhöht das Gesamtgewicht des Fahrrads, da der Formteil wesentlich länger als der zum Verschieben des Hinterrads benötigte Führungsschlitz ist.

Bei einem anderen bekannten Faltfahrrad (DE 41 05 801 A1) ist die als Führungsschlitz ausgebildete Führungsbahnen in einem stumpfwinklig abknickenden, und von der Rahmenstrebe wegführenden Formteil vorgesehen, der sich von der Achsaufnahme quer und frei durch den Dreiecksrahmen bis zur gegenüberliegenden Rahmenstrebe erstreckt und an dieser befestigt ist. Die Eingliederung des Formteils in den Dreiecksrahmen ist baulich aufwendig, stört das optische Erscheinungsbild, erhöht das Gesamtgewicht des Fahrrads unnötig und erzwingt eine mühsame Handhabung beim Ausbau des Hinterrades. Ferner wird die Geometrie der Dreiecksrahmen und des Fahrrads auf unerwünschte Weise beeinflußt.

Bei diesen Faltfahrrädern ist die Entnahme des Hinterrades, etwa zum Auswechseln eines Reifens oder Schlauches bzw. für Wartungs- oder Reparaturarbeiten am Hinterrad, möglich, indem die beiden Dreiecksrahmen auseinandergespreizt werden. Dies ist mühsam und kann zu bleibenden Verformungen führen.

Der Erfindung liegt die Aufgabe zugrunde, ein Faltfahrrad der eingangs genannten Art zu schaffen, bei dem die für möglichst kleine Faltabmessungen nötige Beweglichkeit des Hinterrades baulich einfach, kostengünstig und bedienungsfreundlich erreicht wird, und bei dem die Geometrie des hinteren Rahmenteils auch im Hinblick auf einen optisch gefälligen Gesamteindruck verbessert ist, und Gewicht gespart wird.

Die gestellte Aufgabe wird mit den Merkmalen des Patentanspruchs 1 gelöst.

Bei dieser Ausbildung werden die in beiden Dreiecksrahmen vorgesehenen, hinteren Rahmenstreben zum Führen des Hinterrads bei dessen Verschiebebewegung und zum Haltern des Hinterrades bei gefaltetem Faltfahrrad herangezogen. Es wird diesen Rahmenstreben eine zusätzliche Aufgabe zugeteilt. Dadurch wird die Herstellung vereinfacht. Ferner läßt sich Gewicht sparen. Es ist ein deutlich erweiterter Freiheitsgrad zur geometrischen Gestaltung der Dreiecksrahmen gegeben. Die hinteren Rahmenteile lassen sich formschön und optisch gefällig gestalten, so daß das Faltfahrrad in aufgebautem Zustand kaum von einem normalen Fahrrad zu unterscheiden ist.

Die Ausführungsform gemäß Anspruch 2 ist baulich einfach und bedienungsfreundlich. Der Schieber hält das Hinterrad, sobald dessen Achse aus der Achsaufnahme gelöst ist, am hinteren Rahmenteil. Zweckmäßigerweise, aber nicht notwendigerweise, sind an beiden Rahmenstreben Schieber angeordnet, so daß sich eine saubere Führung und Halterung für das Hinterrad erzielen läßt und bei aufgebautem Faltrad Reaktionskräfte, z.B. einer Rücktrittsbremse oder/und eines Nabenschalt-Mechanismus, aufgenommen werden. Beim Verschieben liegt die Achse des Hinterrades gegebenenfalls auf den Rahmenstreben auf. Die Aufnahmekulisse dient zum Abstützen des Hinterrads beim bestimmungsgemäßen Gebrauch des aufgebauten Faltrads.

Eine zweckmäßige Ausführungsform geht aus Anspruch 3 hervor. Das Herausnehmen und Wiedereinführen der Achse des Hinterrades gestaltet sich bei dieser Ausführungsform einfach.

Eine alternative Ausführungsform geht aus Anspruch 4 hervor. Der Hilfsschieber fängt die freikommende Achse und führt sie entlang der Rahmenstrebe. Der Schieber wird dadurch von Kippkräften freigehalten, die seine leichtgängige Verschiebung beeinträchtigen könnten. Außerdem läßt sich der Schieber kurz und somit leicht auslegen. Der Hilfsschieber ist jedoch nicht unbedingt erforderlich.

Eine alternative, aber vorteilhafte Ausführungsform geht aus Anspruch 5 hervor. Bei dieser Lage der Achsentnahmeöffnung werden die Belastungen im Fahrbetrieb günstig in den hinteren Rahmenteil eingeleitet.

Besonders vorteilhaft ist die Ausführungsform gemäß Anspruch 6, weil nach lösen des Hebels vom Schieber das Hinterrad vollständig frei ist.

Die Ausführungsform von Anspruch 7 ist vorteilhaft, weil der Hebel nach außen abgedeckt wird und optisch in den Hintergrund tritt.

Die Ausführungsform von Anspruch 8 ist zweckmäßig. Der Schwenkbegrenzungsanschlag verhindert, daß das aus der Aufnahmekulisse herausgehobene Hinterrad zu weite Ausschwenkbewegungen ausführt oder aus dem hinteren Rahmenteil heraushängt.

Die Maßnahme von Anspruch 9 ist vorteilhaft, um bei zusammengefaltetem Faltrad das verschobene Hinterrad zu positionieren.

Bei der Ausbildung gemäß Anspruch 10 liegen die Führungsschlitze an den von den Achsaufnahmen zum Gelenk führenden Rahmenstreben, so daß sie optisch in den Hintergrund treten. Die Dreiecksrahmen gleichen fast dem von normalen Fahrrädern gewohnten Erscheinungsbild. Die Herstellung ist einfach, da eine Verbindung des Formteils mit der der Achsaufnahme gegenüberliegenden Rahmenstrebe entfällt. Die Formteile sind nur so lang, wie dies zum Verschieben des Hinterrades beim Zusammenlegen des Fahrrades nötig ist. Dadurch wird Gewicht gespart. Die Abstützung eines Widerlagers einer Rücktrittbremse läßt sich in einem Führungsschlitz problemlos realisieren. Es ergibt sich eine statisch günstige Geometrie der Dreiecksrahmen.

Bei der Ausführungsform gemäß Anspruch 11 verlaufen die Führungsschlitze im Inneren der Dreiecksrahmen. Zum Herausnehmen des Hinterrades müssen die Dreiecksrahmen gespreizt werden.

Bei der Ausführungsform gemäß Anspruch 12 verlaufen die Führungsschlitze hingegen entlang der Außenseiten der Rahmenstreben, so daß das Innere der Dreiecksrahmen vollständig frei bleibt.

Die Ausführungsform gemäß Anspruch 13 ermöglicht eine sehr leichte und grazile Bauweise, da eine Schlitzlängsseite von der Rahmenstrebe direkt begrenzt und nur ein Element zur Begrenzung der anderen Schlitzseite benötigt wird. Dieses Element tritt optisch fast nicht mehr hervor.

Die Ausführungsform gemäß Anspruch 14 ist herstellungstechnisch günstig, weil die Formteile einfach an den Rahmenstreben befestigbar sind. Es wird Gewicht gespart, da die Formteile nur geringfügig länger sind als die Führungsschlitze. Jeder Formteil verbindet auch die Enden der Rahmenstreben an der Achsaufnahme und enthält die Achsaufnahme.

Bei der Ausführungsform gemaß Anspruch 15 sind die Formteile einfach anbringbar und - bei einem Formschluß mit den Rahmenstreben - trotz nur kleiner Verbindungsstellen (z.B. nur Schweißpunkte) haltbar festgelegt.

Eine besonders wichtige Ausführungsform geht aus Anspruch 16 hervor. Nach Öffnen der Führungsschlitze läßt sich das Hinterrad problemlos entnehmen, ohne die Dreiecksrahmen spreizen zu müssen. Dies führt zu bequemer Handhabung bei Problemen, die die Entnahme des Hinterrades erfordern.

Das letztgenannte Ziel wird besonders bequem bei der Ausführungsform gemäß Anspruch 17 erreicht. Ist das Element festgelegt, dann wird das Hinterrad beim Verschieben sauber geführt und abgestützt. Auch die Abstützung eines Widerlagers einer Rücktrittbremse ist problemlos zu verwirklichen. Der einfach zu handhabende Verschluß ermöglicht das Lösen zum Öffnen des Führungsschlitzes und das haltbare Festlegen des Elementes bei geschlossenem Führungsschlitz.

Eine baulich einfache Lösung geht ferner aus Anspruch 18 hervor. Sobald das obere Ende des Elementes mittels des Verschlusses gelöst ist, läßt sich das Element oben oder unten wegschwenken oder vollständig entfernen. Ein Spannschloß oder eine Spannschelle ist rasch abzunehmen bzw. zu lösen und wieder festzulegen.

Die in Anspruch 19 enthaltene Geometrie der Dreiecksrahmen läßt sich bei der geänderten Führung des Hinterrades formschön und statisch günstig auslegen.

Anhand der Zeichnung werden Ausführungsformen des Erfindungsgegenstandes erläutert. Es zeigen:
- Fig. 1: eine Seitenansicht einer ersten Ausführungsform eines Faltrades,
- Fig. 2: ein Detail aus Fig. 1, zuzüglich einer Detailvariante,
- Fig. 3: einen Teil einer Draufsicht zu Fig. 1,
- Fig. 4: schematisch das Faltrad in gefaltetem Zustand,
- Fig. 5: eine Seitenansicht einer weiteren Ausführungsform eines Faltrades,
- Fig. 6: eine Hinteransicht eines Details von Fig. 5, und
- Fig. 7 - 12: Detailvarianten zu den Fig. 5 und 6.

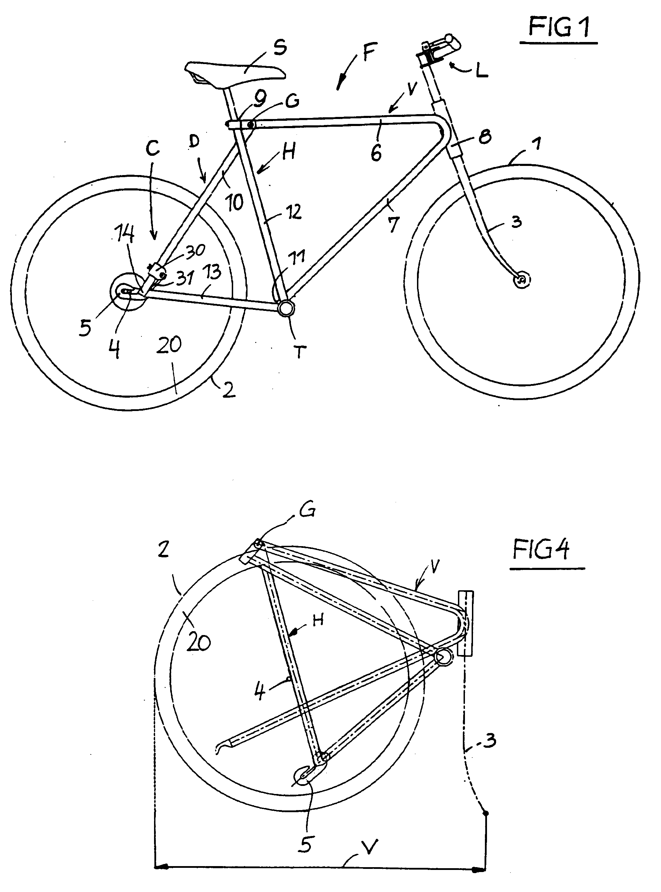

Hauptkomponenten eines Faltfahrrads F gemäß den Fig. 1 bis 4 sind ein vorderer Rahmenteil V und ein hinterer Rahmenteil H. Im vorderen Rahmenteil V ist ein Lenkerrohr 8 festgelegt, das eine Vorderradgabel 3 und einen Lenker L lagert. In der Vorderradgabel 3 ist ein Vorderrad 1 herausnehmbar festgelegt. Im hinteren Rahmenteil H ist in Achsaufnahmen 5 ein einen Reifen 20 aufweisendes Hinterrad 2 mittels seiner Achse 4 angeordnet.

Der vordere Rahmenteil V besteht aus zwei annähernd parallelen und quer zur Fahrradhauptebene beabstandeten oberen Rahmenstreben 6, die mit schräg nach unten verlaufenden, annähernd parallelen und ebenfalls beabstandeten Rahmenstreben 7 verbunden sind und das Lenkerrohr 8 zwischen sich aufnehmen. Die hinteren Enden 9 der oberen Rahmenstreben 6 sind in einem unterhalb eines Sattels S vorgesehenen Gelenk G miteinander und mit dem hinteren Rahmenteil H verbunden. Die freien Enden 11 der unteren Rahmenstreben 7 sind an einem Tretlagergehäuse T lösbar festgelegt.

Der hintere Rahmenteil H besteht aus zwei Dreiecksrahmen D, die deckungsgleich und quer zur Fahrradhauptebene voneinander beabstandet einerseits über das Tretlagergehäuse T und andererseits über das Gelenk G verbunden sind. Jeder Dreiecksrahmen D besteht aus einer von der Achsaufnahme 5 in Richtung zum Gelenk G verlaufenden Rahmenstrebe 10, einer von der Achsaufnahme 5 zum Tretlagergehäuse T verlaufenden unteren Rahmenstrebe 13, und einer vom Tretlagergehäuse T zum Gelenk G verlaufenden vorderen Rahmenstrebe 12, wobei die Enden 14 der Rahmen-streben 10, 13 an den Achsaufnahmen 5 befestigt sind.

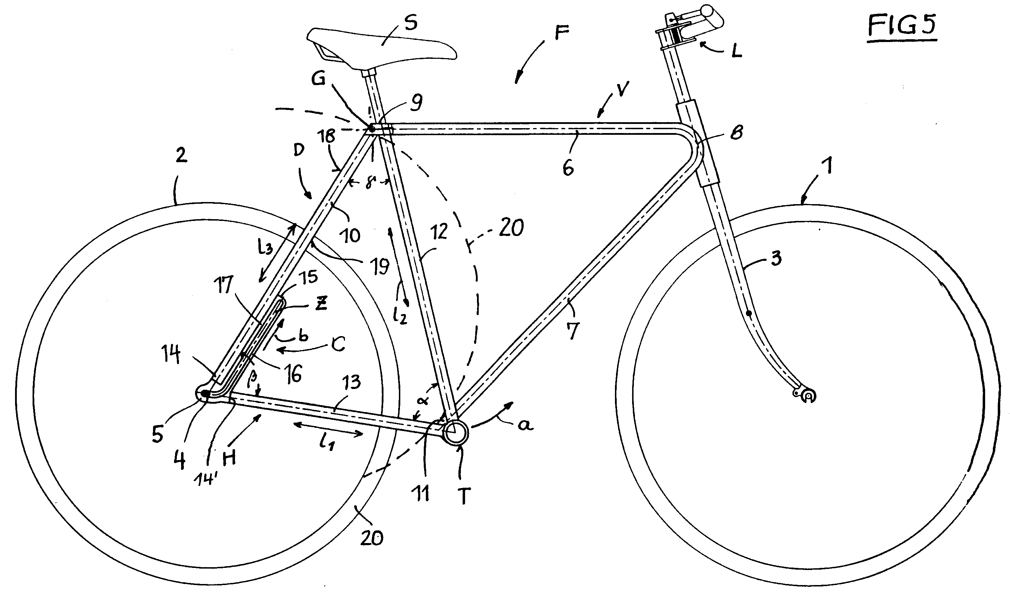

Das Faltfahrrad F läßt sich zusammenfalten (Fig. 4) und hat dann sehr kleine Faltabmessungen. Die größte Faltabmessungen V ist der Abstand zwischen der hinteren Kontur des Hinterrades 2 und dem unteren Ende der Vorderradgabel 3. Diese Anmessung soll so klein wie möglich sein. Aus diesem Grund werden die Rahmenstreben 7 nach lösen vom Tretlagergehäuse T innen an den Rahmenstreben 12 und 10 des hinteren Rahmensteils H vorbei nach hinten geschoben, indem der vordere Rahmenteil V relativ zum hinteren Rahmenteil H im Gelenk G verschwenkt wird. Das Hinterrad 2 wird aus der Achsaufnahme 5 gelöst und dann entlang einer Führungsbahn C verschoben, bis es am Gelenk G und/oder am Tretlagergehäuse T anliegt. Das Hinterrad 2 ist in dieser Position im hinteren Rahmenteil H gesichert.

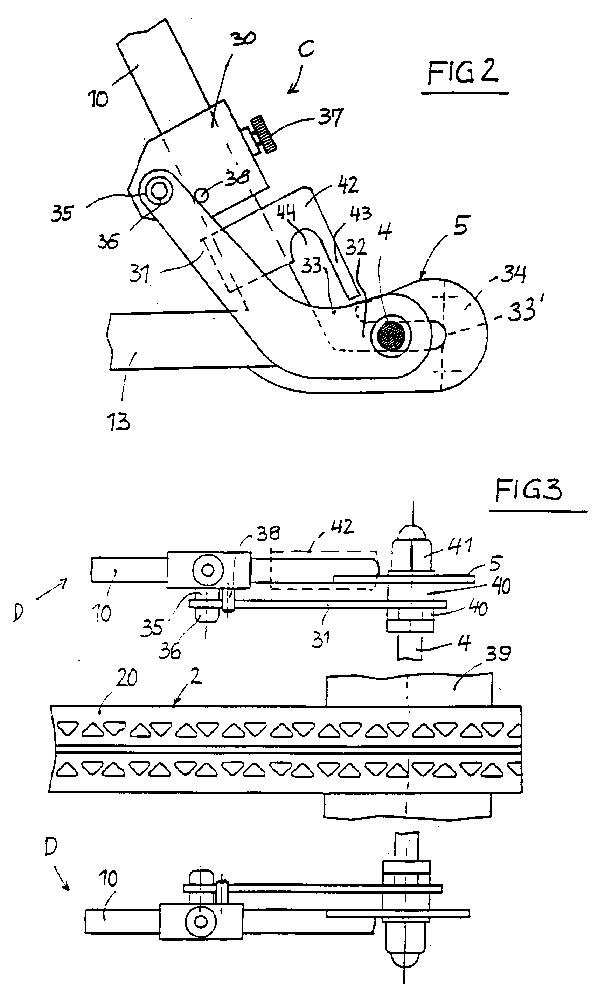

Die Führungsbahn C verläuft entlang jeder Rahmenstrebe 10 des hinteren Rahmenteils H. Zur Führung der Achse 4 des Hinterrades 2 ist zumindest in einem Dreiecksrahmen D, vorzugsweise in beiden Dreiecksrahmen D, ein auf der Rahmenstrebe 10 auf- und abverschiebbarer Schieber 30 vorgesehen, der über einen Hebel 31 mit der Achse 4 verbunden ist (Fig. 2 und 3). Der Schieber 30 umfaßt die Rahmenstrebe 10. Der Hebel 31 ist mit der Achse 4 verbunden und am Schieber 30 schwenkbar in einer Anlenkstelle 35 verbunden, die zweckmäßigerweise lösbar ist (z.B. an der Innensechskantschraube 36).

Die Achsaufnahme 5, die die beiden Rahmenstreben 10 und 13 verbindet, enthält eine Aufnahmekulisse 32 in Schlitzform. Die Aufnahmekulisse 32 besitzt eine Achsentnahmeöffnung 33 bzw. 33'. Bevorzugt ist die Achsentnahmeöffnung 33 bei der Hinterseite der Rahmenstrebe 10 vorgesehen und nach oben offen, so daß sich die Achse 4 nach Lösen der in Fig. 3 gezeigten Spannmuttern 41 in der Aufnahmekulisse 32 nach vorne verschieben und dann zusammen mit dem Schieber 30 nach oben bewegen läßt. Zwischen dem Hebel 31 und dem Schieber 30 kann ein Schwenkbegrenzungsanschlag 38, z.B. in Form eines Stiftes, vorgesehen sein, der verhindert, daß sich der Hebel 31 in Fig. 2 zu weit entgegen dem Uhrzeigersinn um seine Anlenkstelle 35 dreht und dadurch die Achse 4 zu weit von der Rahmenstrebe 10 entfernt zu liegen kommt. Die Achsentnahmeöffnung 33 könnte auch nach unten gerichtet sein. Dann müßte die Achse 4 zunächst nach unten durch die Achsentnahmeöffnung 33 aus der Achsaufnahme 5 herausbewegt und dann hinten um das hintere Ende der Achsaufnahme 5 herum nach oben bewegt werden.

Alternativ ist in Fig. 2 angedeutet, daß die Aufnahmekulisse 32 hinten offen ist und dort ihre Achsentnahmeöffnung 33' besitzt, die zweckmäßigerweise durch einen abnehmbaren Verschluß 34 bei Wunsch zu öffnen ist. Die Aufnahmekulisse 32 wäre dann vorne vollständig und hinten fallweise geschlossen, was zur Belastungsaufnahme vorteilhaft sein könnte. In diesem Fall wäre der Drehbegrenzungsanschlag 38 zweckmäßigerweise anders positioniert, um den Schwenkbereich des Hebels 31 entgegen dem Uhrzeigersinn auf das richtige Maß zu begrenzen.

Am Schieber 30 ist ein Feststeller 37, z.B. eine von Hand betätigbare Spannschraube, vorgesehen, um das nach oben verschobene Hinterrad 2 (Fig. 4) zu positionieren.

In Fig. 3 ist in der Draufsicht erkennbar, daß die Hebel 31 und die Schieber 30 auf beiden Seiten des Hinterrades 2 vorgesehen sind, und daß die Hebel 31 durch Anstandselemente 40 von weiteren Komponenten der Radnabe 39 getrennt sind. Zumindest einer der Hebel 31 könnte zum Ab-stützen einer Rücktrittsbremse herangezogen werden. An-stelle einer lösbaren Anlenkstelle 35 für den Hebel 31 könnte auch der Schieber 30 von der Rahmenstrebe 10 abnehmbar gestaltet sein, um bei Bedarf das Hinterrad 2 vollständig ausbauen zu können.

Es kann zweckmäßig sein (Fig. 2 und 3), unterhalb des Schiebers 30 einen Hilfsschieber 42 auf der Rahmenstrebe 10 zu lagern. Der Hilfsschieber besitzt eine nach unten weisende Fangnase 43 und eine zur Achsentnahmeöffnung 33 offene Fangtasche 44 für die Achse 4. Ist der Hilfsschieber 42 vorgesehen, dann fängt er die aus der Achsaufnahme 5 herausgehobene Achse 4 und führt sie unter Gleiten entlang der Rahmenstrebe 10, wodurch der Schieber 30 von Kippkräften weitgehend verschont wird. Der Drehanschlag 38 könnte weggelassen und der Schieber 30 stark verkürzt werden (z.B. von bis 35 - 40 mm auf 10 - 30 mm). Der Hilfsschieber 42 könnte ein leichter Kunststoff-Formteil sein, oder als leicht lösbare Schelle ausgebildet werden.

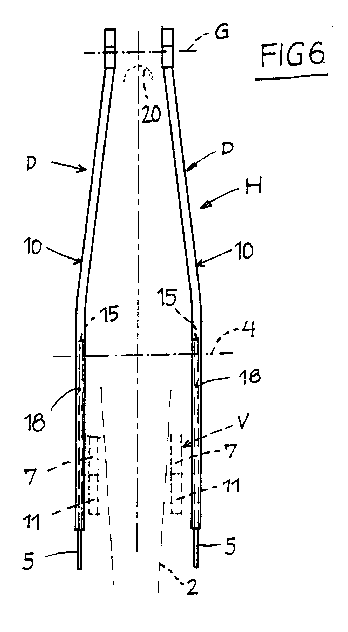

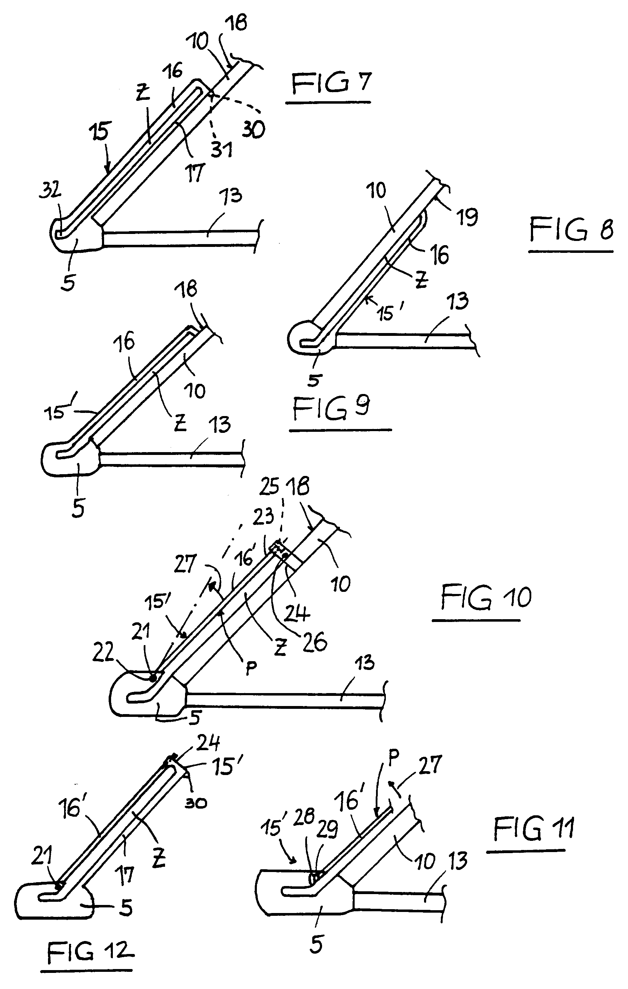

Hauptkomponenten eines anderen Faltfahrrads F gemäß den Fig. 5 und 6 sind der vordere Rahmenteil V und der hintere Rahmenteil H. Im vorderen Rahmenteil V ist das Lenkerrohr 8 vorgesehen, das die Vorderradgabel 3 und den Lenker L lagert. In der Vorderradgabel 3 ist das Vorderrad herausnehmbar festgelegt. Im hinteren Rahmenteil H ist in den Achsaufnahmen 5 das Hinterrad 2 mittels seiner Achse 4 angeordnet.

Bei der Ausführungsform gemäß Fig. 5 wird jede Achsaufnahme 5 vom unteren Ende eines Formteils 15 gebildet, der einen Führungsschlitz Z begrenzt, der über eine vorbestimmte Längserstreckung entlang der Rahmenstrebe 10 verläuft, und zwar entlang deren Innenseite 19.

Der Formteil 15 ist beispielsweise ein Blechzuschnitt. Der Führungsschlitz Z verläuft über einen Teil seiner Länge gerade und knickt in der Achsaufnahme 5 in einen horizontalen Abschnitt (Aufnahmekulisse 32) ab. Der Führungsschlitz Z ist an beiden Schlitzlängsseiten von stabförmigen Elementen 16, 17 des Formteils 15 begrenzt, das an der Rahmenstrebe 10 angeschweißt oder auf andere Weise befestigt ist. Die dem Formteil 15 abgewandte Außenseite der Rahmenstrebe 10 ist mit 18 bezeichnet. Die Eckwinkel jedes Dreiecksrahmens D sind mit α, β, γ angedeutet, während die relativen Längen der Rahmenstreben 10, 12, 13 mit l1, l2 und l3 angegeben sind. Die Eckwinkel α, β und γ sowie die relativen Längen l1, l2, l3 der Dreiecksrahmen D sind so aufeinander abgestimmt, daß sich das gelöste Hinterrad 2 entlang der Führungsschlitze Z in Richtung eines Pfeiles b so weit nach oben verschieben läßt, daß der Reifen 20 in etwa gleichzeitig das Gelenk G und das Tretlagergehäuse T berührt und zwischen den Rahmenstreben 12 hindurch tritt. In zumindest einem Füfrungsschlitz Z kann bei einem Hinterrad 2 mit einer Rücktrittsbremse ein Widerlager der Rücktrittsbremse (nicht dargestellt) abgestützt sein.

Zum Falten des Faltfahrrades F wird das Vorderrad 1 aus der Vorderradgabel 3 entnommen und werden die hinteren Enden 11 der Rahmenstreben 7 vom Tretlagergehäuse T gelöst. In weiterer Folge wird die Achse 4 des Hinterrades 2 gelöst und das Hinterrad 2 in Richtung des Pfeils b nach oben verschoben (strichliert angedeutete Position des Reifens 20). Dann wird das Gelenk G gelöst und der hintere Rahmenteil H in Richtung eines Pfeils a relativ zum vorderen Rahmenteil V und um das Gelenk G verschwenkt, wobei die Rahmenstreben 7 innen an den Rahmen-streben 12 und 13 vorbeigleiten, bis sie über die Achsaufnahmen 5 nach hinten ragen. Der Sattel S wird abgenommen oder eingeschoben. Der Lenker L wird zusammengeklappt und gegebenenfalls ebenfalls eingeschoben. Das Faltfahrrad F wird, gegebenenfalls mit dem Voderrad 1, in einer Tasche aufbewahrt und/oder platzsparend verstaut.

In der Hinteransicht von Fig. 6 sind die hinteren Rahmenstreben 10 der Dreiecksrahmen D des hinteren Rahmen-teils H so gebogen, daß sie unten annähernd parallel sind und oben zum Gelenk G hin konvergieren. Strichliert ist angedeutet, wie nach Verschieben der Achse 4 entlang den Führungsschlitzen Z der Reifen 20 dem Gelenk G angenähert ist und die Rahmenstreben 7 zwischen die Dreiecksrahmen D eingreifen.

Bei der Alternative gemäß Fig. 7 verläuft jeder einen Führungsschlitz Z begrenzende Formteil 15 entlang der Außenseite 18 der Rahmenstrebe 10. Die Rahmenstreben 10 und 13 sind über die Achsaufnahme 5 verbunden. Der Formteil 15 kann mit einem Fortsatz 31 versehen sein, der in eine Vertiefung oder Aussparung 30 der Rahmenstrebe 10 formschlüssig eingreift.

Bei der Variante gemäß Fig. 8 verläuft jeder Führungsschlitz Z entlang der Innenseite 19 der Rahmenstrebe 10, wobei er an einer Schlitzlängsseite direkt durch die Innenseite 19 begrenzt ist. Mit der Achsaufnahme 5 ist das Element 16 des Formteils 15 verbunden, der mit seinem oberen Ende an der Rahmenstrebe 10 festgelegt ist.

Bei der Variante gemäß Fig. 9 ist der Führungsschlitz Z im Formteil 15 entlang der Außenseite 18 der Rahmenstrebe 10 vorgesehen, wobei er an einer Schlitzlängsseite direkt von der Rahmenstrebe 10 begrenzt wird, während die andere Schlitzlängsseite durch das Element 16 des Formteils 15 begrenzt wird, das mit der Achsaufnahme 5 verbunden und an seinem oberen Ende an der Rahmenstrebe 10 befestigt ist.

Bei der Alternative gemäß Fig. 10 ist der Führungsschlitz Z im Formteil 15 an der Außenseite 18 der Rahmenstrebe 10 zusätzlich öffenbar, um das Hinterrad 2 entnehmen zu können. Eine Schlitzlängsseite des Führungsschlitzes Z wird von der Außenseite 18 der Rahmenstrebe 10 begrenzt. Die andere Schlitzseite wird vom Element 16' begrenzt, das stabartig ausgebildet und mit der Achsaufnahme 5 schwenkbar oder aushängbar verbunden ist. Das Element 16' ist beispielsweise ein stabförmiger Körper oder eine Fahrradspeiche P, die mit ihrem unteren Ende (Speichenkopf 21) in eine Querbohrung 22 oder hinter einen Vorsprung 22 der Achsaufnahme 5 eingehängt ist. Das mit 23 bezeichnete obere Ende des Elementes 16' ist in einem lösbaren Verschluß 24 festgelegt, der an der Rahmenstrebe 10 befestigt ist. Beispielsweise dient zum Festlegen eine Spannschraube oder ein Schnellspanner 25. Der Verschluß 24 könnte auch mit einer Halteschraube 26 festgelegt sein. Nach Lösen des oberen Endes 23 des Elementes 16' läßt sich dieses (strichpunktiert angedeutet) in Richtung eines Pfeiles 27 verschwenken, um das Hinterrad herauszuheben.

Bei der Variante gemäß Fig. 11 ist eine ähnliche Konzeption gezeigt wie in Fig. 10. Das Element 16', das beispielsweise eine Fahrradspeiche P sein kann, ist mit seinem unteren Ende 29 an einem Widerlager 28 der Achsaufnahme 5 schwenkbar oder sogar aushängbar festgelegt. Das obere, nicht gezeigte Ende des Elementes 16' läßt sich im Verschluß lösen, damit das Element 16' entweder vollständig weggenommen oder in Richtung des Pfeils 27 verschwenkt werden kann. Ist das Element 16' ein Stab, dann kann sein unteres Ende mit einem Einhängehaken versehen sein, der sich in eine entsprechend geformte Aufnahme der Achsaufnahme 5 einhängen läßt.

Bei der Ausführungsform gemäß Fig. 12 ist der Formteil 15' an der Außenseite 18 der (nicht gezeigten) Rahmenstrebe 10 anbringbar. Eine Schlitzlängsseite des Führungsschlitzes Z wird durch das Element 17 begrenzt, das im Formteil 15' mit der Achsaufnahme 5 einstückig verbunden ist und oben den lösbaren Verschluß 24 enthält. Die andere Schlitzlängsseite des Führungsschlitzes Z wird durch das Element 16' begrenzt, das z.B. stabförmig ist, und mit seinem unteren Ende 21 in einem entsprechenden Widerlager der Achsaufnahme 5 lösbar oder beweglich gehaltert ist. Sein oberes Ende wird im Verschluß 24 lösbar festgelegt. Der Fortsatz 30 dient zur positionierung und Abstützung des Formteils 15' an der Rahmenstrebe 10.

## Patentansprüche

**1.** Faltfahrrad (F), mit einem vorderen und einem hinteren Rahmenteil (V, H), an dem ein Tretlagergehäuse (T) und eine Achsaufnahme für das Hinterrad angebracht sind, wobei der vordere Rahmenteil mit dem hinteren Rahmenteil am Tretlagergehäuse lösbar und in einem vom Tretlagergehäuse beabstandeten Gelenkbereich schwenkbar verbunden ist, und der hintere Rahmenteil aus zwei über das Tretlagergehäuse und im Gelenkbereich verbundenen Dreiecksrahmen besteht, deren jeder eine von der in den Dreiecksrahmen stoffschlüssig eingegliederten Achsaufnahme ausgehende Verschiebe-Führungsbahn für die Achse des Hinterrades aufweist, **dadurch gekennzeichnet**, daß die Führungsbahn (C) entlang einer von der Achsaufnahme (5) in Richtung zum Gelenkbereich (G) angeordneten Rahmenstrebe (10) des Dreiecksrahmens (D) verläuft.

**2.** Faltfahrrad nach Anspruch 1, **dadurch gekennzeichnet**, daß die Rahmenstrebe (10) die Führungsbahn (C) bildet, daß auf der Rahmenstrebe (10) ein Schieber (30) gelagert ist, daß die Achse (4) mit dem Schieber (30) über einen auf der Achse (4) angeordneten und am Schieber (30) schwenkbar angelenkten Hebel (31) gekoppelt ist, daß die Achsaufnahme (5) eine Aufnahmekulisse (32) für die Achse (4) aufweist, und daß die Aufnahmekulisse (32) eine Achsentnahmeöffnung (33, 33') aufweist, die außerhalb des Dreiecksrahmens (D) liegt.

**3.** Faltfahrrad nach Anspruch 2, **dadurch gekennzeichnet**, daß die Achsentnahmeöffnung (33) der Aufnahmekulisse (32) permanent offen ist und bei der Hinterseite der Rahmenstrebe (10) von der Achsaufnahme (5) nach oben oder nach unten weist.

**4.** Faltfahrrad nach den Ansprüchen 1 bis 3, **dadurch gekennzeichnet**, daß zwischen dem Schieber (30) und der Achsaufnahme (5) ein Hilfsschieber (42) auf der Rahmenstrebe (10) verschiebbar angeordnet ist, der eine Fangnase (43) und eine zur Achsentnahmeöffnung (33) offene Fangtasche (44) für die Achse (4) aufweist.

**4.** Faltfahrrad nach Anspruch 2, **dadurch gekennzeichnet**, 5aß die Achsaufnahmeöffnung (33') von der Achsaufnahme (5) nach hinten weist und mittels eines lösbaren Verschlusses (34) verschlossen ist.

**6.** Faltfahrrad nach den Ansprüchen 2 und 4, **dadurch gekennzeichnet**, daß der Hebel (31) lösbar am Schieber (30) angelenkt ist.

**7.** Faltfahrrad nach den Ansprüchen 2 und 4, **dadurch gekennzeichnet**, daß der Hebel (31) im Inneren des Dreiecksrahmens (D) am Schieber (30) angelenkt ist.

**8.** Faltfahrrad nach wenigstens einem der Ansprüche 1, 2, 3, 6 und 7, **dadurch gekennzeichnet**, daß zwischen dem Hebel (31) und dem Schieber (30) ein Schwenkbegrenzungsanschlag (38) für den Hebel (31) vorgesehen ist.

**9.** Faltfahrrad nach den Ansprüchen 4, 6, 7, 8, **dadurch gekennzeichnet**, daß der Schieber (30) einen Feststeller (37) aufweist.

**10.** Faltfahrrad nach Anspruch 1, **dadurch gekennzeichnet**, daß die Führungsbahn (C) ein in der Länge begrenzter und mit einer Aufnahmekulisse (32) der Achsaufnahme (5) verbundener Führungsschlitz (Z) in einem in den Dreiecksrahmen (D) stoffschlüssig eingegliederten Formteil (15, 15') ist, und daß der Formteil (15, 15') nur in etwa so lang wie der Führungsschlitz (Z) ist, längs der Rahmenstrebe (10) angeordnet und an dieser derart befestigt ist, daß der Führungsschlitz (Z) in etwa parallel zur Rahmenstrebe (10) verläuft.

**11.** Faltfahrrad nach Anspruch 10, **dadurch gekennzeichnet**, daß der Formteil (15, 15') an der zum Tretlagergehäuse (T) weisenden Innenseite (19) der Rahmenstrebe (10) angeordnet ist.

**12.** Faltfahrrad nach Anspruch 10, **dadurch gekennzeichnet**, daß der Formteil (15, 15') an der dem Tretlagergehäuse (T) abgewandten Außenseite (18) der Rahmenstrebe (10) angeordnet ist.

**13.** Faltfahrrad nach wenigstens einem der Ansprüche 10 bis 12, **dadurch gekennzeichnet**, daß der Führungsschlitz (Z) an einer Schlitzlängsseite direkt von der Innen- oder der Außenseite (18, 19) der Rahmenstrebe (10) und an der anderen Schlitzlängsseite von einem stabförmigen, von der Achsaufnahme (5) ausgehenden, vorzugsweise mit der Achsaufnahme (5) baulich vereinigten, Element (16, 16') des Formteils (15, 15') begrenzt ist.

**14.** Faltfahrrad nach wenigstens einem der Ansprüche 10 bis 12, **dadurch gekennzeichnet**, daß der Führungsschlitz (Z) an beiden Schlitzlängsseiten von stabförmigen Elementen (16, 17) des Formteils (15) begrenzt ist, die von der Achsaufnahme (5) ausgehen, vorzugsweise einstückig mit dieser ausgebildet, und am der Achsaufnahme (5) abgewandten Ende des Führungsschlitzes (Z) miteinander, vorzugsweise einstückig, verbunden sind.

**15.** Faltfahrrad nach wenigstens einem der Ansprüche 10 bis 14, **dadurch gekennzeichnet**, daß am Formteil (15, 15') im Abstand von der Achsaufnahme (5), vorzugsweise an der Achsaufnahme (5) abgewandten Ende des Formteils (15, 15') ein zur Rahmenstrebe (10) weisender Fortsatz (30) angeformt ist, und daß der Formteil (15) mit dem Fortsatz (30) an der Rahmenstrebe (10) befestigt ist und/ und in eine Vertiefung oder Aussparung (31) in der Außen- oder Innenseite (18, 19) der Rahmenstrebe (10) formschlüssig eingreift.

**16.** Faltfahrrad nach einem der Ansprüche 10 bis 15, **dadurch gekennzeichnet**, daß der Führungsschlitz (Z) öffenbar ausgebildet ist.

**17.** Faltfahrrad nach Anspruch 16, **dadurch gekennzeichnet**, daß das der Rahmenstrebe (10) abgewandte Element (16') verschwenkbar oder aushängbar und mit einem lösbaren Verschluß (24) an der Rahmenstrebe (10) oder im Formteil (15') festlegbar ist.

**18.** Faltfahrrad nach den Ansprüchen 16 und 17, **dadurch gekennzeichnet**, daß das Element (16) mit seinem unteren Ende (21, 29) in einem Gelenk oder einem Widerlager (28, 22) im Bereich der Achsaufnahme (5) verankert ist und mit seinem oberen Ende (23) in den als Spannschloß oder Spannschelle ausgebildeten, lösbaren Verschluß (24) eingreift.

**19.** Faltfahrrad nach wenigstens einem der Ansprüche 1 bis 18, **dadurch gekennzeichnet**, daß die Eckwinkel (α, β, γ) im Dreiecksrahmen (D) und die relativen Längen (l1, l2, l3) der Rahmenstreben (10, 12, 13) derart aufeinander abgestimmt sind, daß das Hinterrad (2) mit der Achse (4) entlang der Führungsbahnen (C) bis zur Anlage des Reifens (20) am Tretlagergehäuse (T) und/oder am Gelenk (G) verschiebbar ist.
